(19) Europäisches Patentamt
European Patent Office
Office européen des brevets

(11) **EP 4 776 105 A1**

(12) **EUROPEAN PATENT APPLICATION**
published in accordance with Art. 153(4) EPC

(43) Date of publication:
**15.07.2026 Bulletin 2026/29**

(21) Application number: **23958207.5**

(22) Date of filing: **06.11.2023**

(51) International Patent Classification (IPC):
*G06F 3/0354* (2013.01)          *G06F 3/038* (2013.01)
*G06F 3/04812* (2022.01)       *G06F 3/04845* (2022.01)

(52) Cooperative Patent Classification (CPC):
G06F 3/0354; G06F 3/038; G06F 3/04812;
G06F 3/04845

(86) International application number:
**PCT/JP2023/039895**

(87) International publication number:
**WO 2025/099801 (15.05.2025 Gazette 2025/20)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(71) Applicant: **Nintendo Co., Ltd.
Kyoto-shi, Kyoto 601-8501 (JP)**

(72) Inventors:
• **MASAOKA, Takafumi
Kyoto 601-8501 (JP)**
• **SHIMOHATA, Yasuyuki
Kyoto 601-8501 (JP)**

(74) Representative: **Lorenz Seidler Gossel Part. mbB
Widenmayerstr. 23
80538 München (DE)**

(54) **INFORMATION PROCESSING METHOD, INFORMATION PROCESSING PROGRAM, AND INFORMATION PROCESSING SYSTEM**

(57) A first virtual object is translated based on first data based on an optical sensor of a mouse, and first control is performed on the first virtual object based on second data based on an attitude sensor of the mouse. At this time, when the first data and the second data satisfy a first condition, an amount of translation of the first virtual object based on the first data is made smaller than an amount of translation in a case where the first condition is not satisfied, while the first control is performed on the object based on the second data.

FIG. 31

EP 4 776 105 A1

## Description

TECHNICAL FIELD

The present disclosure relates to information processing for controlling a virtual object based on data outputted from a mouse.

BACKGROUND ART

There is a technology for controlling a pointer on a display based on a movement operation and a rotation operation on a mouse (for example, Patent Literature 1).

CITATION LIST

[PATENT LITERATURE]

[PTL 1] Japanese Laid-Open Patent Publication No. 2004-70843

SUMMARY OF THE INVENTION

PROBLEMS TO BE SOLVED BY THE INVENTION

In the above technology, there has been room for making improvement so that a virtual object is controlled in accordance with an intention of a user.

SOLUTION TO THE PROBLEMS

In view of the above points, for example, the following configuration examples are given.

(Configuration 1)

Configuration 1 is directed to an information processing method to be executed by a processor of an information processing apparatus, the information processing method causing the processor to execute the following: acquiring first data based on an output of an optical sensor provided in a mouse; acquiring second data based on an output of an attitude sensor provided in the mouse; translating a first virtual object based on the first data; performing first control on the first virtual object based on the second data; and when the first data and the second data satisfy a first condition, making an amount of translation of the first virtual object based on the first data smaller than an amount of translation in a case where the first condition is not satisfied, while performing the first control on the object based on the second data.

According to the above configuration example, when the first condition is satisfied, an influence of the first data in performing the first control is reduced. This makes it easier to perform the first control in accordance with the intention of a user.

(Configuration 2)

In Configuration 2 based on Configuration 1 above, when the first condition is satisfied, the first virtual object may not be translated.

(Configuration 3)

In Configuration 3 based on Configuration 1 above, the processor may be caused to determine a degree of making the amount of translation of the first virtual object smaller, in accordance with the first data and/or the second data.

According to the above configuration example, for example, operability when translating the first virtual object while rotating the first virtual object can be improved.

(Configuration 4)

In Configuration 4 based on any one of Configurations 1 to 3 above, the first control may be control for rotating the first virtual object.

(Configuration 5)

In Configuration 5 based on Configuration 4 above, the processor may be caused to make a movement direction of the first virtual object based on the first data correspond to an attitude after rotation of the first virtual object.

According to the above configuration example, an intuitive operation becomes possible.

(Configuration 6)

In Configuration 6 based on Configuration 5 above, the processor may be caused to, when the first virtual object has rotated by a first angle, rotate the movement direction of the first virtual object based on the first data by the first angle.

According to the above configuration example, as an example, the movement direction of a hand of the user and the movement direction of the first virtual object are made to coincide, and an operation without a sense of discomfort becomes possible.

(Configuration 7)

In Configuration 7 based on Configuration 5 or 6 above, the processor may be caused to: acquire third data based on a first operation on the mouse; and set the attitude of the first virtual object to a specified attitude based on the third data.

According to the above configuration example, as an example, regarding a correspondence relationship between the attitude of the mouse and the attitude of the first virtual object, when a correspondence relationship unintended by the user occurs, the correspondence relationship can be reset. Thus, operability can be improved.

(Configuration 8)

In Configuration 8 based on any one of Configurations 5 to 7 above, the processor may be caused to: execute specified game processing; and at start of play of a game by the specified game processing, display a screen for guiding an initial attitude of the mouse at the start.

According to the above configuration example, by making the user take the initial attitude of the mouse at the start of the game, a sense of discomfort can be prevented from occurring in the correspondence relationship between the mouse and the attitude of the first virtual object thereafter.

(Configuration 9)

In Configuration 9 based on Configuration 8 above, the processor may be caused to: acquire fourth data based on a second operation on the mouse; and start play of the game based on the fourth data.

According to the above configuration example, by making the user perform a trigger for the game start, occurrence of a sense of discomfort in operation can be suppressed. It is not always possible for the information processing apparatus to determine whether or not the mouse is in a specified attitude, and even if such determination is possible, the specified attitude might possibly be an attitude that feels unnatural to the user. For example, even if the user is guided such that the mouse faces the front, and the user intends to take that attitude, in reality, the mouse may face slightly to the right or left from the specified attitude depending on the angle of an arm or a hand. In view of such a point, by making the user take an attitude in which the user does not feel a sense of discomfort and then making the user perform the trigger for the game start, occurrence of a sense of discomfort in operation thereafter can be suppressed.

(Configuration 10)

In Configuration 10 based on any one of Configurations 1 to 9 above, the processor may be caused to: acquire fifth data based on a third operation on the mouse; acquire sixth data based on a fourth operation on the mouse; when the first virtual object is in a specified positional relationship with a second virtual object, set the second virtual object to a movable state based on the fifth data; set the second virtual object to a non-movable state based on the sixth data; and move and rotate the second virtual object in the movable state in accordance with movement and rotation of the first virtual object.

According to the above configuration example, operability with respect to the second virtual object can be improved. In moving or rotating the second virtual object, there is a limit to operating without changing a grip on the mouse. For instance, there is a case where the second virtual object cannot be rotated greatly by only one rotation operation without changing the grip. Therefore, while making switching between the movable state and the non-movable state possible, operability with respect to the second virtual object can be improved by interposing the first virtual object. As an example, after rotating the second virtual object to some extent in the movable state, by returning the rotation attitude of the hand of the user to the original state while in the non-movable state and setting the movable state again, the second virtual object can be further rotated.

(Configuration 11)

In Configuration 11 based on any one of Configurations 1 to 10 above, the first condition may be a condition indicating that a center of a rotation operation of the mouse is within a specified range.

(Configuration 12)

In Configuration 12 based on Configuration 11 above, the specified range may be a range included in a bottom surface of the mouse.

According to the above configuration example, the accuracy of determining a movement such as rotating the mouse on the spot without moving the mouse can be improved.

(Configuration 13)

In Configuration 13 based on any one of Configuration 1 to 10 above, the first condition may be a condition indicating that an amount of horizontal movement of the mouse relative to an amount of rotation of the mouse is small.

(Configuration 14)

In Configuration 14 based on any one of Configuration 1 to 13 above, the processor may be caused to: acquire seventh data stored in the mouse, from the mouse; and set the first condition based on the seventh data.

According to the above configuration example, it becomes possible to set the first condition in accordance with a feature of a rotation trajectory of the mouse based on the size or shape of the bottom surface of the mouse, or the overall shape of the mouse.

BRIEF DESCRIPTION OF THE DRAWINGS

[FIG. 1] FIG. 1 is a block diagram showing an example of hardware configurations of an information processing apparatus 2 and a mouse 40.

[FIG. 2] FIG. 2 shows an example of the appearance of the mouse 40.

[FIG. 3] FIG. 3 shows an example of the appearance of the mouse 40.

[FIG. 4] FIG. 4 shows an example of the game screen of the game processing assumed in an embodiment.

[FIG. 5] FIG. 5 shows an example of the game screen of the game processing assumed in the embodiment.

[FIG. 6] FIG. 6 shows an example of the game screen of the game processing assumed in the embodiment.

[FIG. 7] FIG. 7 shows an example of the game screen of the game processing assumed in the embodiment.

[FIG. 8] FIG. 8 shows an example of the game screen of the game processing assumed in the embodiment.

[FIG. 9] FIG. 9 shows an example of the game screen of the game processing assumed in the embodiment.

[FIG. 10] FIG. 10 is a diagram for illustrating an operation example of "on-the-spot rotation".

[FIG. 11] FIG. 11 is a diagram for illustrating an operation example of "on-the-spot rotation".

[FIG. 12] FIG. 12 is a diagram for illustrating an operation example of "on-the-spot rotation".

[FIG. 13] FIG. 13 is a diagram for illustrating an operation example of "on-the-spot rotation".

[FIG. 14] FIG. 14 is a diagram for illustrating an operation example of "on-the-spot rotation".

[FIG. 15] FIG. 15 is a diagram for illustrating an operation example of "on-the-spot rotation".

[FIG. 16] FIG. 16 is a diagram for illustrating an operation example of "on-the-spot rotation".

[FIG. 17] FIG. 17 is a diagram for illustrating an operation example of "on-the-spot rotation".

[FIG. 18] FIG. 18 is a diagram for illustrating an operation example of "on-the-spot rotation".

[FIG. 19] FIG. 19 is a diagram for illustrating an operation example of "on-the-spot rotation".

[FIG. 20] FIG. 20 is a diagram for illustrating a center of rotation.

[FIG. 21] FIG. 21 is a diagram for illustrating the center of rotation.

[FIG. 22] FIG. 22 is a diagram for illustrating the center of rotation.

[FIG. 23] FIG. 23 is a diagram for explaining reference characters.

[FIG. 24] FIG. 24 is a diagram for illustrating correction of a movement direction.

[FIG. 25] FIG. 25 is a diagram for illustrating correction of a movement direction.

[FIG. 26] FIG. 26 is a diagram for illustrating correction of a movement direction.

[FIG. 27] FIG. 27 is a diagram for illustrating correction of a movement direction.

[FIG. 28] FIG. 28 is a diagram for illustrating correction of a movement direction.

[FIG. 29] FIG. 29 is a memory map showing an example of various data stored in a storage unit 22 of the information processing apparatus 2.

[FIG. 30] FIG. 30 is a flowchart showing the details of game processing.

[FIG. 31] FIG. 31 is a flowchart showing the details of the game processing.

[FIG. 32] FIG. 32 is a flowchart showing the details of the game processing.

[FIG. 33] FIG. 33 is a diagram for illustrating a modification.

[FIG. 34] FIG. 34 is a diagram for illustrating the modification.

DESCRIPTION OF EMBODIMENTS

Hereinafter, one embodiment will be described.

[Hardware configuration of information processing apparatus 2]

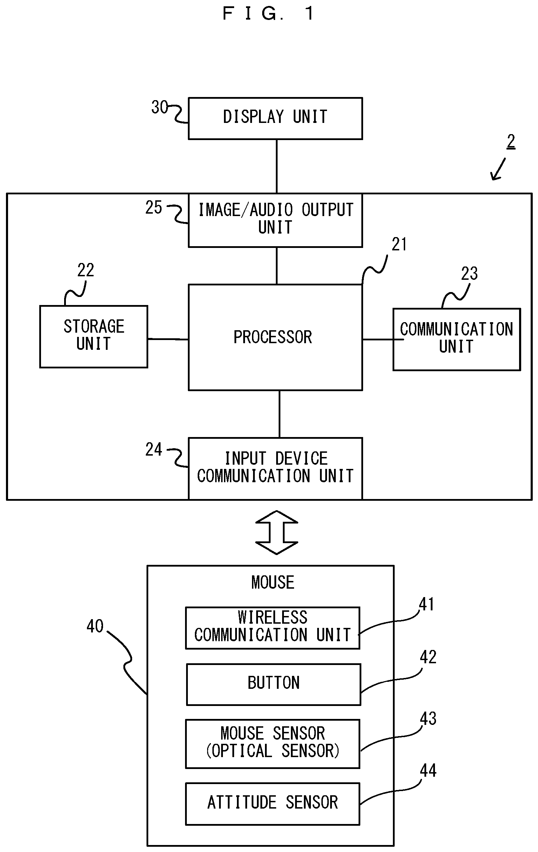

FIG. 1 is a block diagram showing an example of hardware configurations of an information processing apparatus 2 and a mouse which is an example of an input device according to the present embodiment. In FIG. 1, the information processing apparatus 2 includes a processor 21. The processor 21 is an information processing unit that executes various types of information processing executed in the information processing apparatus 2. In the present embodiment, the processor 21 is composed of an SoC (System-on-a-chip) including at least a CPU (Central Processing Unit) function and a GPU (Graphics Processing Unit) function. In another embodiment, the CPU and the GPU may be separate components. The processor 21 executes various types of information processing by executing an information processing program (for example, a game program) stored in a storage unit 22. The storage unit 22 may be an internal storage medium such as a flash memory or a DRAM (Dynamic Random Access Memory) or may be configured to utilize an external storage medium mounted to a slot that is not shown, or the like.

In addition, the information processing apparatus 2 includes a communication unit 23 for performing communication with another information processing apparatus or a specified server.

In addition, the information processing apparatus 2 includes an input device communication unit 24 for the information processing apparatus 2 to perform wired or wireless communication with various input devices. In the present embodiment, a mouse 40 as described later will be described as an example of the input device.

In addition, a display unit 30 (for example, a monitor, etc.) is connected to the information processing apparatus 2 via an image/audio output unit 25. The processor 21 outputs, for example, an image or audio generated by execution of the above information processing, to the display unit 30 via the image/audio output unit 25.

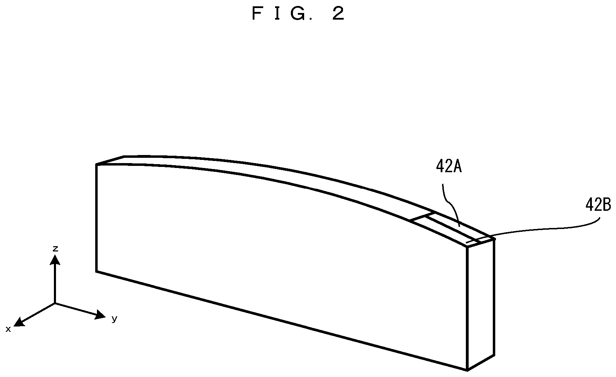

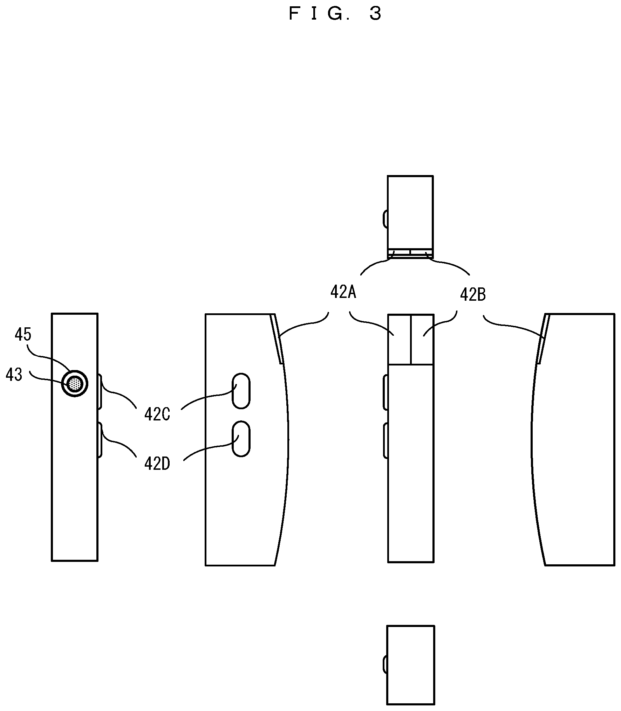

Next, the mouse 40 will be described. The mouse 40 of the present embodiment is an input device connectable to the information processing apparatus 2 by wireless communication. FIG. 2 and FIG. 3 show schematic diagrams of the appearance of the mouse 40 assumed in the present embodiment. FIG. 2 is a perspective view showing an example of the mouse 40, and FIG. 3 is six orthogonal views showing an example of the mouse 40. Broadly speaking, the mouse 40 assumed in the present embodiment has a form in which the width of a general mouse for a PC is narrowed to form a substantially plate-like shape. Specifically, the length in the left-right direction of the mouse 40 is shorter than the length in the up-down direction and the length in the front-rear direction thereof. The length in the up-down direction of the mouse 40 is shorter than the length in the front-rear direction thereof. Here, as shown in FIG. 2, in the present embodiment, the left-right direction of the mouse 40 is defined as an x-axis direction, the front-rear direction thereof is defined as a y-axis direction, and the up-down direction thereof is defined as a z-axis direction. The z-axis direction is a direction perpendicular to the bottom surface of the mouse 40 (in a case where the bottom surface of the mouse 40 is placed on a work surface, the direction may be perpendicular to the work surface). In addition, two buttons 42A and 42B are provided on the upper surface of the mouse 40. The button 42A may be used for a left-click operation, and the button 42B may be used for a right-click operation. In addition, a mouse sensor 43 is exposed on the bottom surface of the mouse 40. In the present embodiment, the mouse sensor 43 is exposed from an opening 45 provided at a position slightly forward from the center of the bottom surface. The position where the mouse sensor 43 is exposed is not limited to this position. In the present embodiment, a case where an optical sensor is used as an example of the mouse sensor 43 will be described as an example. The mouse sensor 43 does not have to be directly exposed from the opening 45 provided on the bottom surface of the mouse 40. For example, a light guide path may be formed from the opening 45 provided on the bottom surface of the mouse 40 to the mouse sensor 43 provided inside the mouse 40. In addition, buttons 42C and 42D are also provided on the left side surface of the mouse 40. For example, the buttons 42C and 42D are provided at positions where these buttons are operable with a right hand thumb in a case where the mouse 40 is operated with a right hand. The operation means provided on the left side surface is not limited to buttons. For example, instead of or in addition to the buttons, a stick or a touch panel may be provided.

Referring back to FIG. 1, the hardware configuration of the mouse 40 will be described again. The mouse 40 includes the buttons 42A to 42D. Hereinafter, the buttons may be collectively referred to simply as buttons 42.

In addition, the mouse 40 includes the optical mouse sensor 43 as described above. The mouse sensor 43 detects movement of the mouse 40 and outputs a movement direction, a movement amount, etc., of the mouse 40.

In addition, the mouse 40 includes an attitude sensor 44. Specifically, the mouse 40 includes an angular velocity sensor as the attitude sensor 44. In the present embodiment, the angular velocity sensor detects angular velocities around specified three axes. The attitude sensor 44 is not limited to the angular velocity sensor, and in another embodiment, various sensors capable of detecting an attitude, such as a geomagnetic sensor, etc., may be used. In addition, these sensors may be used together, or another sensor such as an acceleration sensor may be used together. In addition, a plurality of optical sensors may be combined and used as the attitude sensor 44. For example, based on a difference between detection values of the respective optical sensors (difference in movement direction, etc.), it may be possible to detect that the mouse 40 has been rotated, etc.

In addition, the mouse 40 also includes a wireless communication unit 41 for performing wireless communication with the input device communication unit 24.

Information indicating the pressed state of the button unit 42, various detection results by the mouse sensor 43, and various detection results by the attitude sensor 44 are repeatedly outputted to the wireless communication unit 41 at appropriate timings and transmitted to the information processing apparatus 2.

[Processing assumed in present embodiment]

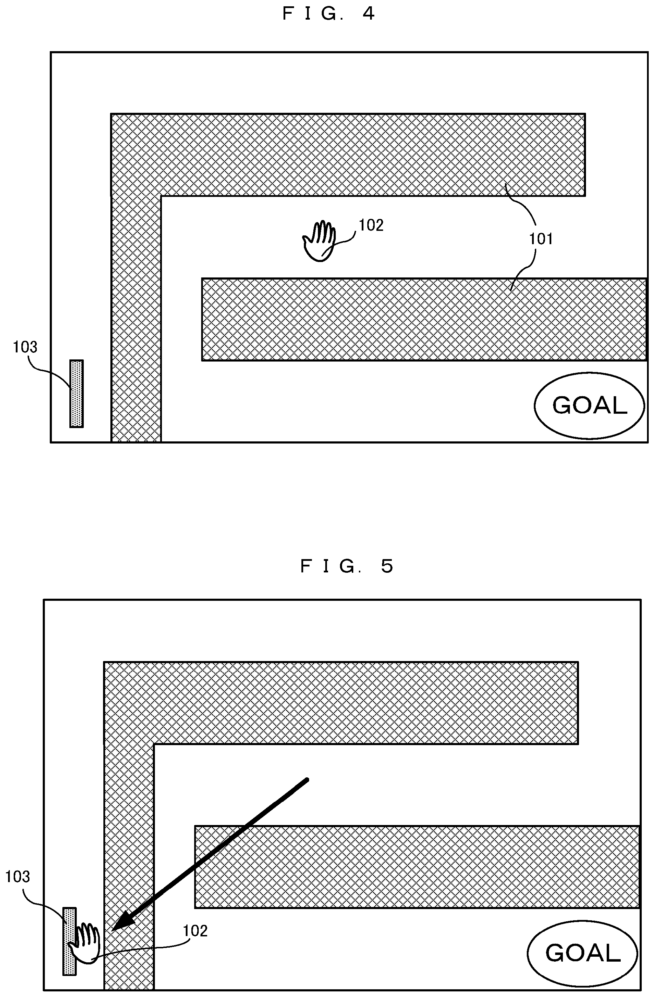

Next, an outline of information processing assumed in the present embodiment will be described. In the present embodiment, game processing is assumed as an example of the information processing. FIG. 4 to FIG. 9 show examples of a game screen of the game processing assumed in the present embodiment. A game in this example is assumed to be a 2D game, and a game image that provides a bird's-eye view of the virtual space is displayed. In FIG. 4, obstacle objects 101 placed to constitute a maze, a hand object 102 also used as a mouse pointer, and a rod object 103 to be operated by a user are displayed. In the present embodiment, an initial attitude (attitude at a time of game start) of the rod object 103 is an attitude in which the rod object 103 is vertically long as shown in FIG. 4. This game is a game in which the rod object 103 is moved from a start point to a goal point while preventing the rod object 103 from coming into contact with the obstacle objects 101. Hereinafter, operation examples of the rod object 103 will be described.

In this game, an operation experience of grasping and moving the rod object 103 with the hand object 102 is provided. Therefore, from the state of FIG. 4, first, the user moves the hand object 102 to a position overlapping with the rod object 103 by moving the mouse 40 in a lower-left direction. As a result, a state as shown in FIG. 5 is reached.

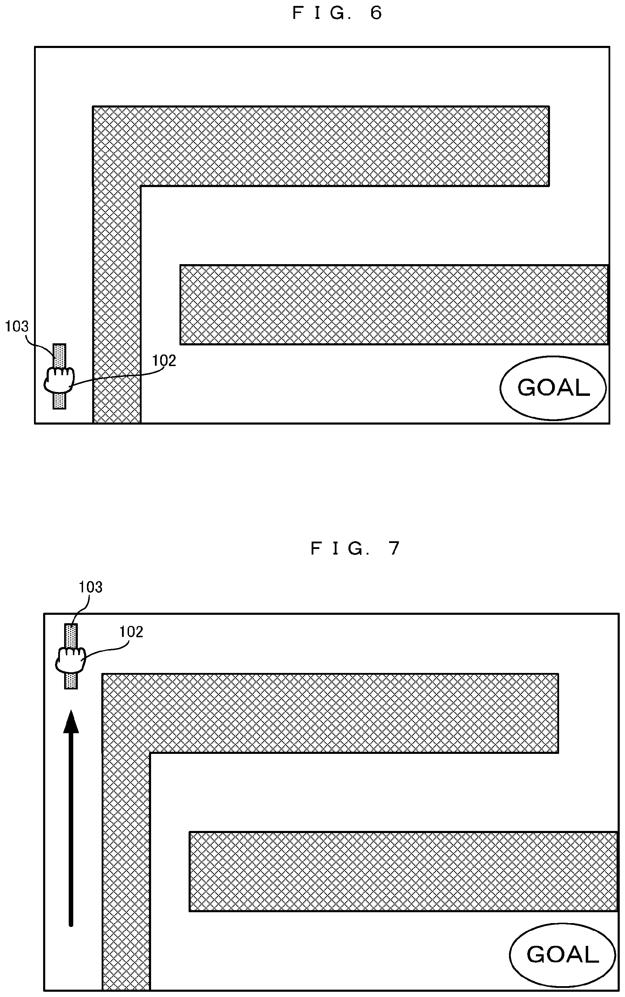

Next, by pressing the button 42A (hereinafter referred to as left-click on), the display form of the hand object 102 changes from an image of opening a hand to an image of grasping the rod object 103 as shown in FIG. 6. By this, a state in which the rod object 103 is grasped is shown. In this game, when the hand object 102 is grasping the rod object 103 as described above, it becomes possible to move (specifically, move and rotate) the rod object 103. Hereinafter, this state is referred to as a "movable state". In addition, when pressing of the button 42A is stopped in the movable state (referred to as left-click off), the movable state is canceled and the display form of the hand object 102 also returns to the original state.

By the user translating the mouse 40 forward while maintaining the movable state as shown in FIG. 6, the rod object 103 and the hand object 102 can be moved toward the upward direction of a screen as shown in FIG. 7. In the present embodiment, more accurately, control for moving the rod object 103 in accordance with movement of the hand object 102 is performed.

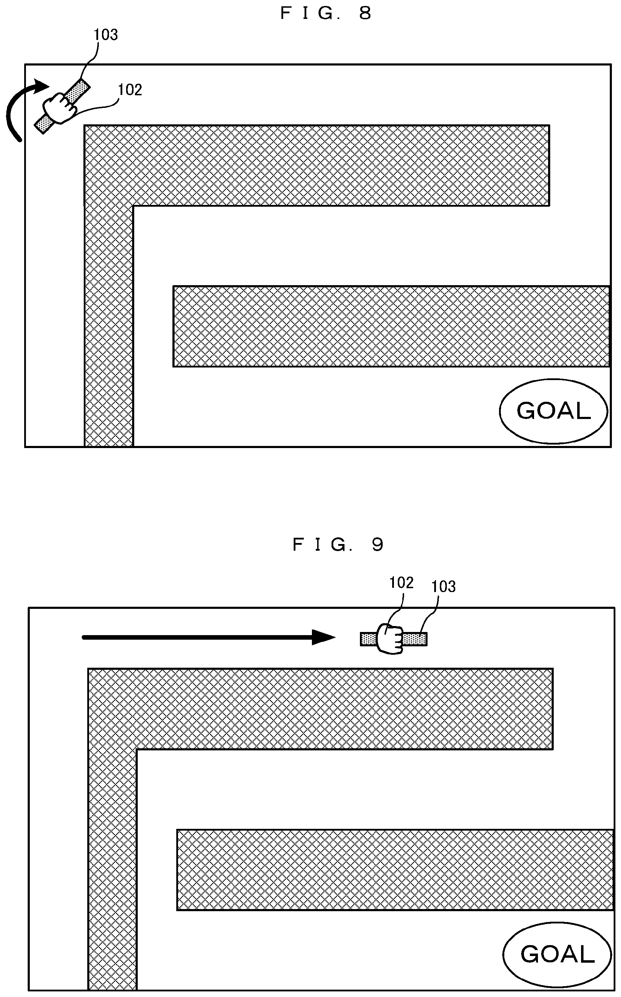

Next, after moving the rod object 103 to a position that is a corner of a passage as shown in FIG. 7, the user attempts to move the rod object 103 in the right direction along the passage this time. During the movement, the user can rotate the rod object 103 such that the rod object 103 takes a horizontally long attitude in order to prevent the rod object 103 from coming into contact with the obstacle objects 101. At this time, an operation of rotating the rod object 103 is an operation as follows. While maintaining the state in which the mouse 40 is left-clicked on (maintaining the movable state), the user performs an operation such that the mouse 40 itself is rotated on the spot, for example, clockwise. That is, the user performs an operation such that the mouse 40 is rotated around the z-axis in FIG. 2, in other words, in a yaw direction, while trying not to translate the mouse 40 itself as much as possible. In the following description, when "rotation of the mouse 40" is simply recited, it indicates rotation around the z-axis in FIG. 2. In addition, hereinafter, such an operation of rotating the mouse 40 on the spot is referred to as "on-the-spot rotation". By such "on-the-spot rotation" being performed, as shown in FIG. 8, the hand object 102 and the rod object 103 can be rotated around an axis orthogonal to a display surface, that is, a depth direction axis. In the present embodiment, more accurately, control for rotating the rod object 103 in accordance with rotation of the hand object 102 is performed. Here, as an example, it is assumed that the hand object 102 and the rod object 103 are finally rotated 90 degrees clockwise from the state of FIG. 7.

If the rod object 103 can be rotated so as to take the horizontally long attitude, the user can move the rod object 103 to the right without causing the rod object 103 to come into contact with the obstacle objects 101 as shown in FIG. 9 by translating the mouse 40 to the right while maintaining the movable state.

A condition for clearing the game is for the user to move the rod object 103 to the goal point while using such operations for "movement" and "rotation" of the rod object 103. In addition, when the rod object 103 comes into contact with the obstacle object 101, it becomes a mistake.

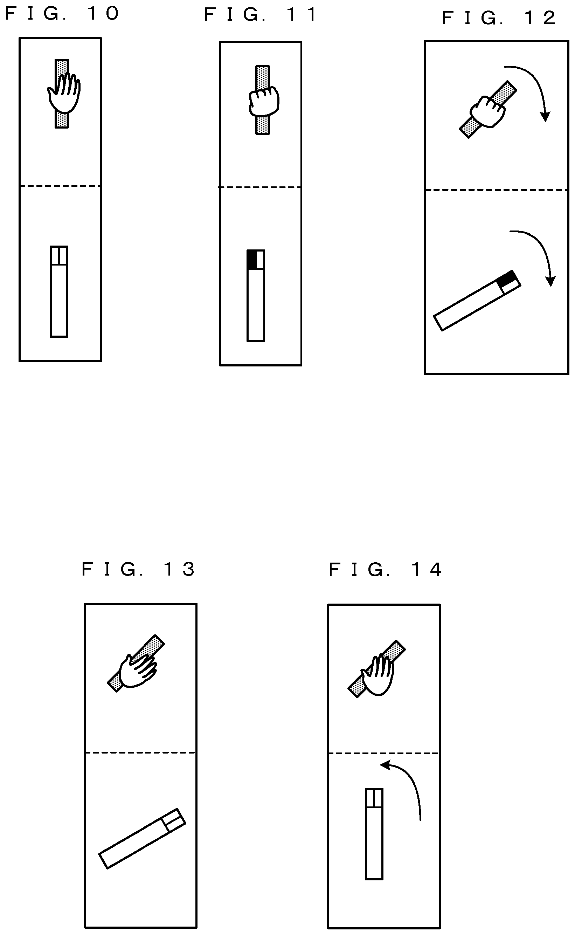

Here, supplemental explanation regarding the movable state and the operation of "on-the-spot rotation" will be given. As described above, in a case where an attempt is made to rotate the mouse 40 while trying not to move the mouse 40, for example, an operation of rotating the mouse 40 in an attitude of pinching the mouse 40 with a thumb and a middle finger, a ring finger, and a little finger of a right hand is conceivable (index finger is used for left click). In the case of such an operation, performing a rotation operation using bases of fingers or a wrist as a fulcrum is conceivable, but since the movable ranges of the fingers and the wrist are limited, for example, in a case where the user wants to rotate the rod object 103 by 90 degrees clockwise, it is not always possible to rotate 90 degrees by one rotation operation. In this game, by making it possible to move the rod object 103 only in the movable state, the following operation is made possible. That is, in order to rotate the rod object 103 by 90 degrees, the operation is to rotate the rod object 103 to an intermediate point (for example, about 45 degrees), temporarily cancel the movable state, return the attitude of the mouse 40 to the attitude before rotation, and then set the movable state again, and perform the remaining rotation. To illustrate an example of a flow of such an operation, for example, it is assumed that an initial state is as shown in FIG. 10. In FIG. 10, an upper half within a rectangular frame shows display states of the rod object 103 and the hand object 102, and a lower half shows a schematic top-down view of the mouse 40 in real space.

When the user performs a left-click on in the state of FIG. 10, the movable state is reached as shown in FIG. 11. In FIG. 11, the button 42A is filled in black to show that a left-click on is being performed. Thereafter, it is assumed that the mouse 40 is rotated to an angle as shown in FIG. 12. Accordingly, the hand object 102 and the rod object 103 rotate. Then, it is assumed that at a time when the mouse 40 is rotated to this point, it has become impossible to rotate the mouse 40 any further. Therefore, the user performs a left-click off by releasing the finger from the button 42A. As a result, a state as shown in FIG. 13 is reached. In FIG. 13, the image of the hand object 102 has returned to the image of when not in the movable state (hereinafter, "non-movable state"). Then, as shown in FIG. 14, the user returns the mouse 40 to the attitude before rotation by rotating the mouse 40 counterclockwise (without performing a left-click on). At this time, while the hand object 102 returns to the original attitude by rotating counterclockwise in accordance with rotation of the mouse 40, the attitude of the rod object 103 does not change.

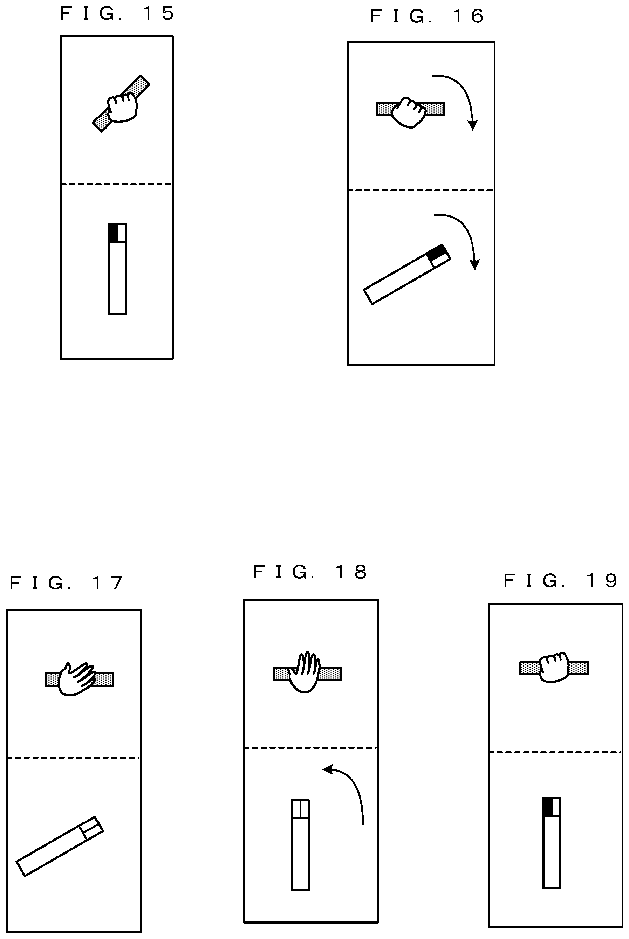

Then, as shown in FIG. 15, the user switches to the movable state by performing a left-click on again, and rotates the mouse 40 clockwise as shown in FIG. 16. By this, rotation can be added to the rod object 103 such that the rod object 103 takes the horizontally long attitude.

Thereafter, as shown in FIG. 17, the movable state is canceled by an operation of left-click off, and as shown in FIG. 18, the attitude of the mouse 40 is returned to the attitude before rotation. Then, by switching to the movable state again as shown in FIG. 19 and translating the mouse 40, for example, in the right direction, the rod object 103 can be translated in the right direction. Of course, the rod object 103 can also be translated in the right direction by translating the mouse 40 in the right direction while in the state shown in FIG. 16.

By repeating the operation of on-the-spot rotation while switching between the movable state and the non-movable state as described above, the rod object 103 can be rotated to a desired angle. Such switching of the movable state is used not only for rotation but also for moving the rod object 103. For example, it is possible to translate the rod object 103 from the left edge to the vicinity of the center of the screen toward the right, temporarily cancel the movable state, return the position of the mouse 40, and then set the movable state again, and move the rod object 103.

As described above, in this game, the hand object 102 and the rod object 103 can be object to be performed by the user, and, in the following description, the hand object 102 and the rod object 103 may be collectively referred to as "operation target objects".

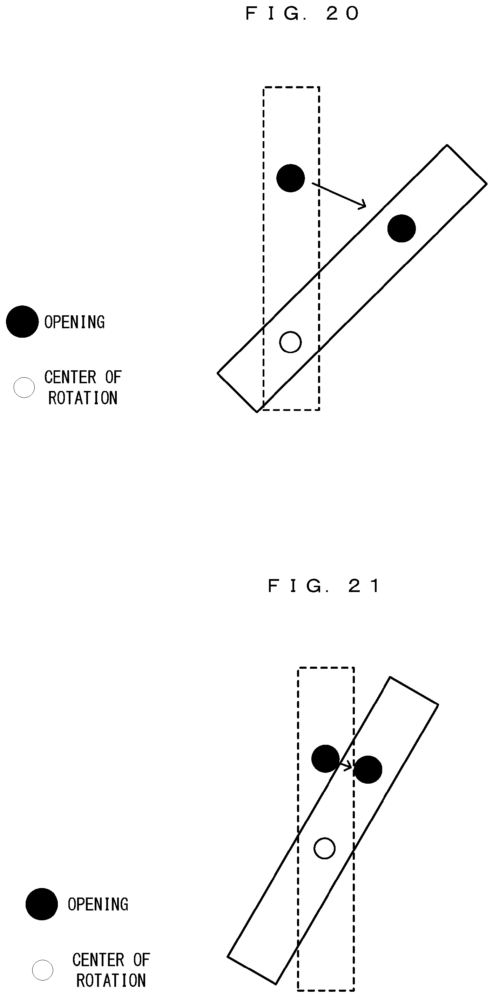

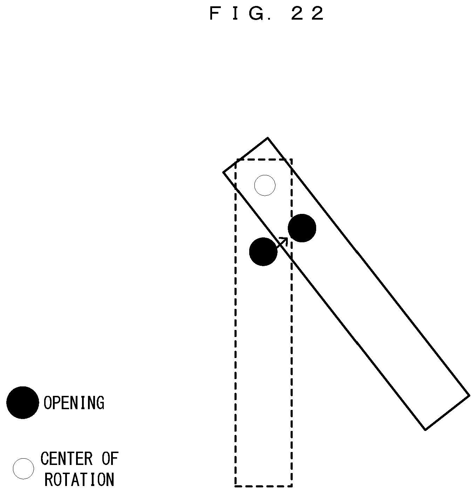

Meanwhile, as described above, in this game, in a case where the user wants to change the attitude of the rod object 103, for example, at a corner of a passage, the operation of rotating the mouse 40 as described above is required. On the other hand, since it becomes a mistake if the rod object 103 hits the obstacle object 101, the user is required to perform a careful and delicate rotation operation. However, even if the action for "on-the-spot rotation" as described above is performed, the rotation center of the mouse 40 do not coincide with the opening 45, which is provided on the bottom surface for guiding light to the mouse sensor 43, in some cases due to the movable range of a hand or fingers of the user or a positional relationship between the rotation center and the opening 45, etc. In particular, in a case where the user rotates the mouse 40 by a certain angle, it is difficult to always make the rotation center of the mouse 40 coincide with the opening 45. That is, even if the attitude of the mouse 40 is changed by a movement of "on-the-spot rotation", since the mouse 40 actually moves in a horizontal direction with respect to the work surface, the output of the mouse sensor 43 changes in accordance with the movement of the mouse 40 in the horizontal direction. For example, FIG. 20 to FIG. 22 show examples of a case where the mouse 40 is subjected to "on-the-spot rotation". Any of the drawings shows an example in which the rotation center is within the bottom surface of the mouse 40, but positions within the bottom surface are different from each other. Thus, even if the user performs "on-the-spot rotation", as long as the position of the opening 45 and a position serving as the rotation center do not coincide, the mouse sensor 43 can produce a slight output corresponding to translation of the mouse 40. In the examples of FIG. 20 and FIG. 21, the mouse sensor 43 moves in a lower-right direction on the work surface, and in the example of FIG. 22, the mouse sensor 43 moves in an upper-right direction. Thus, a movement amount and a movement direction detected by the mouse sensor 43 differ depending on where the mouse is rotated around. If such horizontal movement is reflected in movement of the rod object 103 as it is, although the user intends only to rotate the rod object 103, a result occurs in which the rod object 103 also moves horizontally while rotating, and as a result, a possibility of the rod object 103 coming into contact with the obstacle object 101 also increases.

In view of the above points, in the present embodiment, in a case where translation of the mouse 40 is detected by the mouse sensor 43, the translation is treated by distinguishing whether the translation is movement accompanying the operation of "on-the-spot rotation" as described above or due to (normal) translation that is not "on-the-spot rotation". Specifically, in the present embodiment, whether or not the movement detected by the mouse sensor 43 is accompanying "on-the-spot rotation" is determined. Then, in a case where it is not "on-the-spot rotation" (in a case of normal translation), while rotating the operation target object based on the output of the attitude sensor 44, the operation target object is moved using output data of the mouse sensor 43. On the other hand, in a case of "on-the-spot rotation", the same control as the above is performed regarding rotation control of the operation target object based on the output of the attitude sensor 44, but control executed based on the output data from the mouse sensor 43 is made different. Specifically, even if contents of the output data of the mouse sensor 43 are data contents for executing control to move the operation target object by a first distance if it is normal (that is, in a case where a condition to be regarded as "on-the-spot rotation" is not satisfied), control for moving by the first distance is not performed and different control is performed. More specifically, in a case of "on-the-spot rotation" when moving the operation target object with the output data from the mouse sensor 43, the movement amount is made smaller than in a case where it is not "on-the-spot rotation". Making the movement amount smaller includes making the movement amount zero.

[Determination principle of "on-the-spot rotation"]

Next, a principle for determining whether or not it is "on-the-spot rotation" in the present embodiment will be described. In a case where the user intentionally performs an action of "on-the-spot rotation", some position within the bottom surface (grounding surface) of the mouse 40 may be the rotation center. On the other hand, there is a case where rotation unintentionally occurs also when the user translates the mouse 40, but at this time, some position outside the bottom surface of the mouse 40 such as an elbow position or the like of the user may be the rotation center. Therefore, in the present embodiment, by determining whether or not the rotation center of the mouse 40 is within the bottom surface, whether or not to regard it as "on-the-spot rotation" is determined. Since the bottom surface of the mouse 40 of the present embodiment is long in the y-axis direction and short in the x-axis direction as shown in FIG. 2 and FIG. 3, it is assumed that movement (deviation) of the rotation center in the x-axis direction does not occur in the action of "on-the-spot rotation".

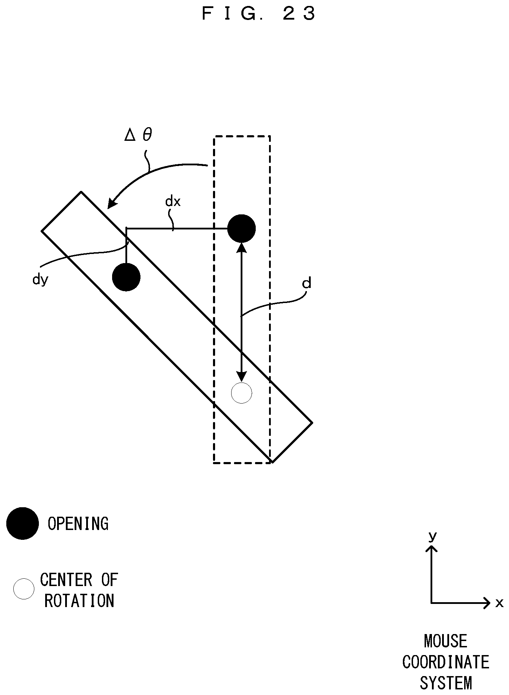

Here, strictly speaking, in a series of actions of "on-the-spot rotation", within the range of the above assumption, it is considered that rotation occurs while the rotation center itself changes. However, in a case where an instantaneous minute change is observed, the rotation center can be regarded as being fixed. From this, as shown in FIG. 23, in a case where a minute rotation angle is defined as $\Delta\theta$, movement amounts of the position of the opening 45 are defined as dx and dy, and a distance between the rotation center and the position of the opening 45 is defined as d, it is considered that the following relationships hold.

<In case where rotation center is below position of opening 45>

$$dx = -d \times \sin(\Delta\theta) \approx -d \times \Delta\theta$$

$$dy = -d \times (1 - \cos(\Delta\theta)) \approx -d \times (\Delta\theta)^2/2$$

<In case where rotation center is above position of opening 45>

$$dx = d \times \sin(\Delta\theta) \approx d \times \Delta\theta$$

$$dy = -d \times (1 - \cos(\Delta\theta)) \approx -d \times (\Delta\theta)^2/2$$

The above relationships utilize that the following hold when $\Delta\theta$ is sufficiently small.

$$\sin(\Delta\theta) \approx \Delta\theta$$

$$\cos(\Delta\theta) \approx 1 - (\Delta\theta)^2/2$$

Regarding the distance d, based on the above mathematical formulas, the distance d is obtained by the following mathematical formula.

$$d1 \approx \left| \frac{dx}{\Delta\theta} \right| \quad \cdots \text{ Formula 1}$$

The above mathematical formula is a mathematical formula focusing on dx, but it is also possible to obtain the distance d by the following mathematical formula focusing on dy.

$$d2 \approx \left| \frac{2dy}{(\Delta\theta)^2} \right| \quad \cdots \text{ Formula 2}$$

Next, in order to determine whether or not the distance d (d1, d2) obtained above is a value indicating that the rotation center of the mouse 40 is within the bottom surface, whether or not the distance d is within a threshold is determined. Here, in a case where the position of the opening 45 is shifted from the center in the front-rear direction of the bottom surface of the mouse, since distances from the opening 45 to the front end and the rear end of the mouse bottom surface are different, thresholds to be compared with the distance d are different. Therefore, first, whether the rotation center is on the front side or the rear side of the opening 45 is determined based on the following conditions. Regarding the sign of $\Delta\theta$, in FIG. 23, the sign is positive in a case of counterclockwise rotation is positive and is negative in a case of clockwise rotation.

(Condition 1: Rotation center is behind the opening 45)
dy < 0 and dx and $\Delta\theta$ have different signs
(Condition 2: Rotation center is in front of the opening 45)
dy $\geq$ 0 and dx and $\Delta\theta$ have the same sign

In a case where Condition 1 is satisfied, D1 (D1A, D1B) is set as a threshold. In a case where Condition 2 is satisfied, D2 (D2A, D2B) is set as a threshold. In the present embodiment, since the opening 45 is forward from the center of the bottom surface with respect to the front-rear direction, D1 is a value larger than D2. It may be determined that Condition 2 is satisfied by the fact that Condition 1 is not satisfied. In addition, Condition 1 and Condition 2 are examples, and for example, Condition 1 may determine only dy < 0, or other determinations may be performed.

In the above, in a case where Condition 1 is satisfied, the following determination is performed next in the present embodiment.

(Condition 3)

$$d1 < D1A$$

(Condition 4)

$$d2 < D1B$$

In the present embodiment, in a case where both Condition 3 and Condition 4 are satisfied, it is regarded that the user is intentionally performing "on-the-spot rotation" of the mouse 40. Then, dx and dy obtained from the output of the mouse sensor 43 in this case are treated so as not to be regarded as amounts of translation in normal movement. In the above, D1B is a value larger than D1A. This is because the mouse 40 in the present embodiment has a shape long in the y-axis direction as shown in FIG. 2, and when on-the-spot rotation is performed, since dy is smaller compared to dx, there is a possibility that d2 varies more than d1 due to an influence of error of the mouse sensor 43, etc., and this is to make d2 fall within D1B even if d2 varies somewhat.

In the above, "on-the-spot rotation" is determined in a case where both Condition 3 and Condition 4 are satisfied, but "on-the-spot rotation" may be determined in a case where either one is satisfied. Alternatively, only one of Condition 3 or Condition 4 may be used for determination, or other conditions may be used. In addition, in the above, the threshold to be compared with the distance d is set from either D1 or D2 depending on whether the rotation center is in front of or behind the opening 45, but a common threshold may be used. In addition, d1 or d2 may be multiplied by a coefficient corresponding to whether the rotation center is in front of or behind the opening 45 and then compared with the threshold.

In addition, as described above, in the present embodiment, in a case where it is determined to be "on-the-spot rotation" is determined, the movement amount of the operation target object based on the output data of the mouse sensor 43 is made smaller than in a case where it is determined not to be "on-the-spot rotation". Here, also in a case of "on-the-spot rotation", the operation target object may be moved although the movement amount is made small. For example, in a case of laterally moving the mouse 40 while rotating the mouse 40, there is a possibility that it is partially determined to be "on-the-spot rotation" by the above determination. At this time, particularly in a case where the mouse 40 is moved slowly, it is conceivable that the rod object 103 stops here and there during movement and smooth movement cannot be performed. Therefore, even if it is determined to be "on-the-spot rotation", by moving the operation target object, occurrence of a sense of discomfort in the user can be suppressed. A reduction degree of the movement amount of the operation target object may be a fixed value or rate, or may be a variable value or rate. For example, as the value of the distance d is smaller, the reduction degree may be larger. Alternatively, the reduction degree may be determined based on either data from the mouse sensor 43 or the attitude sensor 44.

The above determination principle focuses on a point that the rotation center of the mouse is assumed to be within a range of the bottom surface of the mouse 40 when the user intends to perform "on-the-spot rotation", but "on-the-spot rotation" may be determined by another principle. As an example, in a case where the user intends "on-the-spot rotation", it is assumed that a state occurs in which an amount of translation detected by the mouse sensor 43 is (very) small relative to a rotation amount of the mouse 40. Focusing on such an assumption, when the amount of translation is small relative to an attitude change amount, control to suppress movement control based on translation may be performed. Conditions derived as a result may be identical to or different from the various conditions described above.

[Movement direction correction by attitude]

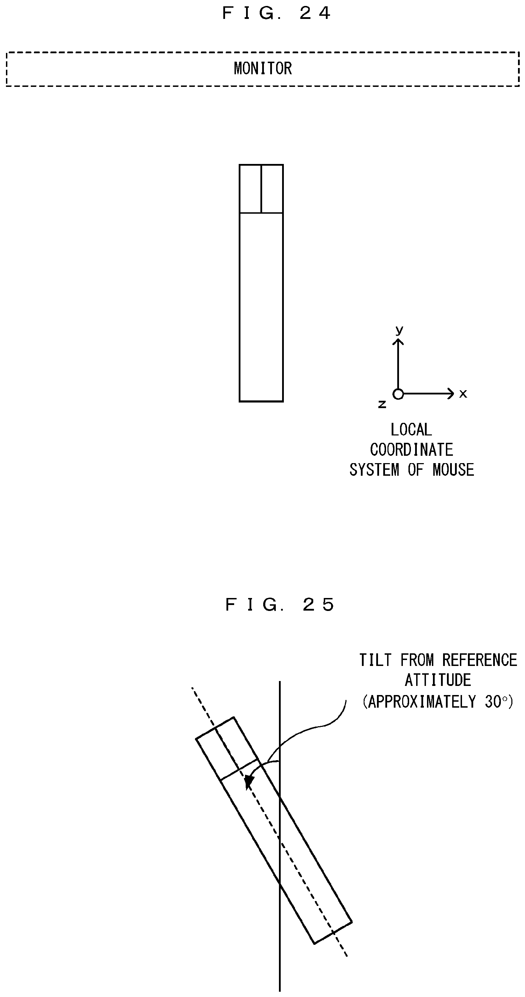

Meanwhile, in the above description, regarding a relationship between a movement direction of the mouse 40 and a movement direction of a virtual object on the screen, an attitude as shown in FIG. 24 is considered as a reference attitude, and the relationship is based on a premise of a correspondence relationship in which up-down and left-right directions on a specified work surface on which the bottom surface of the mouse 40 contacts and the mouse 40 can move coincide with the up-down and left-right directions of the screen. Specifically, the relationship is a relationship in which a y-axis positive direction of the mouse 40 (upward direction on the work surface) corresponds to the upward direction of the screen, and an x-axis positive direction of the mouse 40 (rightward direction on the work surface) corresponds to the right direction of the screen. In addition, in FIG. 24, it is assumed that there is a monitor on a y-axis positive direction side of a local coordinate system of the mouse 40. That is, a positional relationship in which a plane including a display surface and the y-axis of the local coordinate system of the mouse 40 are substantially orthogonal is assumed. In a case where a mouse is used in, for example, a personal computer, etc., it is common that an operation is performed while maintaining such a reference attitude and positional relationship.

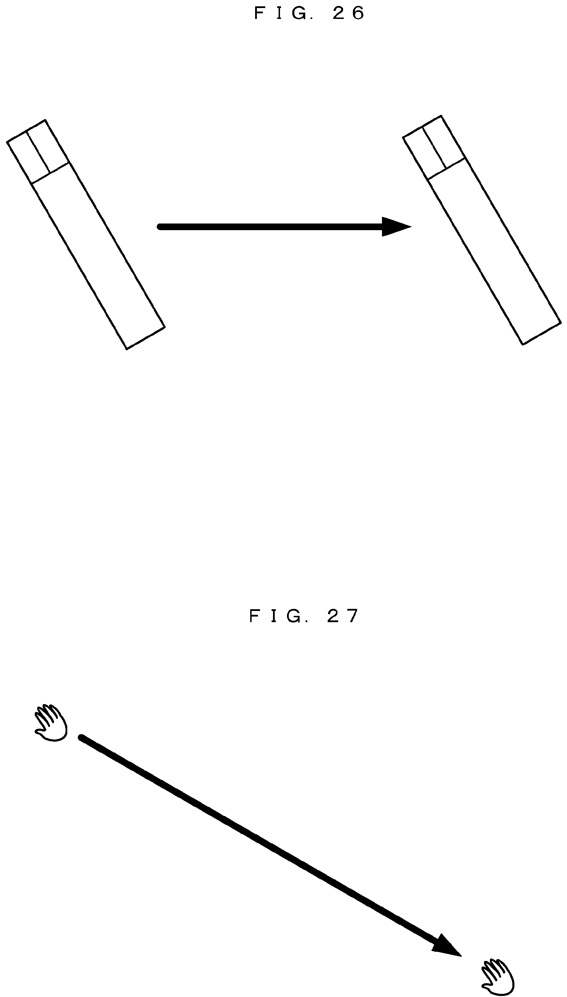

However, in this game, rotating the mouse 40 is required. As an example, the user rotates the mouse 40 around the z-axis from a state of the reference attitude as described above to perform "on-the-spot rotation" of the mouse 40. In the present embodiment, since control to link the attitude of the hand object 102 with the attitude of the mouse 40 is performed, the attitude of the hand object 102 changes (rotates) in accordance with "on-the-spot rotation" of the mouse 40. For example, when the mouse 40 is rotated counterclockwise by about 30° (+30°) from the reference attitude in FIG. 24, the mouse 40 reaches an attitude as shown in FIG. 25. In addition, accordingly, the hand object 102 also rotates by about 30°. Here, a case is considered where the user translates the mouse 40 in a true right direction as shown in FIG. 26 in real space while maintaining this attitude. That is, a case is assumed where as an intention of the user, an operation with an intention of moving the hand object 102 (also the rod object 103 in a case of the movable state) in the true right direction within the game screen is performed. In this case, considering that the mouse 40 is in a state of an attitude tilted by 30° from the reference attitude, a direction in which the mouse 40 is moved is detected as a direction of 30° obliquely lower right when viewed from a bird's-eye perspective of the work surface. That is, a movement direction seen from the mouse 40, that is, a movement direction based on the local coordinate system of the mouse, is determined as an obliquely backward right direction. As a result, in the game screen, for example, as shown in FIG. 27, the hand object 102 moves to the lower right, and a result may occur in which the intention of operation of the user who wants to move the hand object 102 to the true right is not reflected.

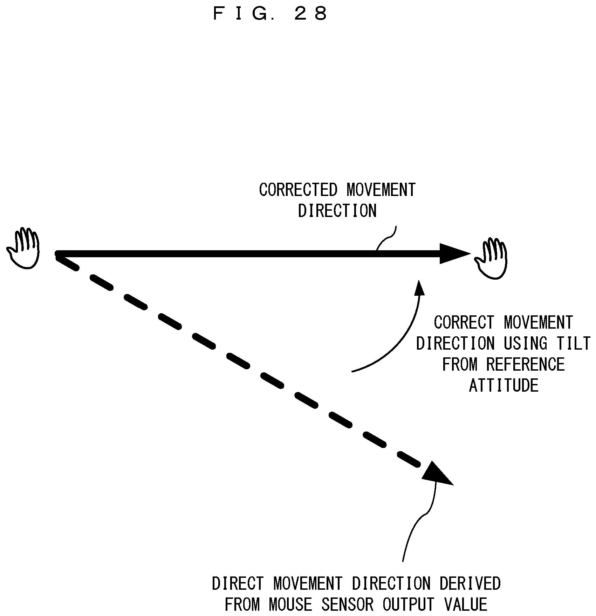

In view of the above points, in the present embodiment, control to make the movement direction of the hand object 102 based on output data of the mouse sensor 43 correspond to the attitude after rotation of the hand object 102 is performed. Specifically, in the present embodiment, the following control is performed. First, the attitude of the mouse 40 at a time of start of game play is stored as a reference attitude. In this game, a game play start operation is requested to the user, and the attitude of the mouse 40 when the start operation is performed is stored as the reference attitude. Here, it is assumed that the reference attitude of the mouse 40 is an attitude as shown in FIG. 24 and is a vertically long attitude that is the same as the initial attitude of the rod object 103. Then, during play of the game, difference data of attitudes between the reference attitude of the mouse 40 and a current attitude of the mouse 40 is recorded. The difference data is, for example, a difference in angle around the z-axis between the reference attitude and the current attitude. To show a specific example, in a case where the mouse 40 is rotated clockwise by 90° from the state of the reference attitude, "-90°" is recorded, in a case where the mouse 40 is rotated counterclockwise by 90°, "+90°" is recorded, and in a case where the mouse 40 is rotated by 180°, "+180° (may be -180°)" is recorded as contents of the difference data. Then, when determining the movement direction of the hand object 102, correcting the movement direction of the mouse 40 (movement direction seen from the mouse 40) obtained from the output data of the mouse sensor 43 using the difference data, and then movement control of the hand object 102 is performed. For example, a case is assumed where the difference from the reference attitude is 30° counterclockwise (+30°) as shown in FIG. 25. In this case, when determining the movement direction of the hand object 102, as shown in FIG. 28, correction to rotate the movement direction of the mouse 40 obtained from the output data of the mouse sensor 43 counterclockwise by about 30° is performed. By performing such correction of the movement direction, a direction in which a hand (grasping the mouse 40) was moved in real space and the movement direction of the hand object 102 within the screen can be made to coincide, and an intuitive movement operation on the hand object 102 becomes possible. In addition, by performing control to move the rod object 103 in accordance with movement of the hand object 102, as a result, a similar result is obtained also regarding the movement direction of the rod object 103.

The control for correcting the movement direction is an example. As another example, instead of the attitude of the mouse 40, a difference between an initial attitude of the hand object 102 and a current attitude of the hand object 102 may be used as the difference data. In addition, an instantaneous rotation amount of the mouse 40 may be sequentially reflected in a correction amount of the movement direction of the hand object 102 without using the reference attitude.

[Details of processing of present embodiment]

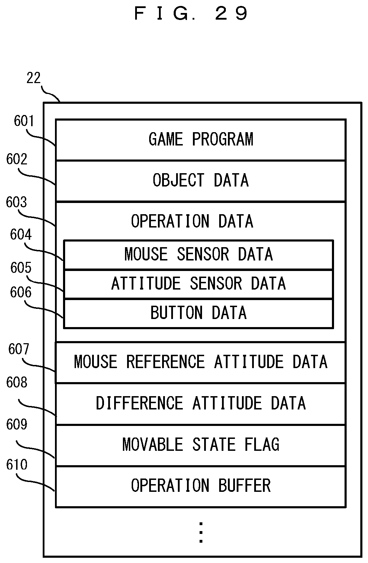

Next, with reference to FIG. 29 to FIG. 32, the game processing in the present embodiment will be described in more detail.

[Data to be used]

First, various data used in the processing of the present embodiment will be described. FIG. 29 is a memory map showing an example of various data stored in the storage unit 22 of the information processing apparatus 2. In the storage unit 22, a game program 601, object data 602, operation data 603, mouse reference attitude data 607, difference attitude data 608, a movable state flag 609, an operation buffer 610, etc., are stored. The game program 601 is a program for executing the game processing according to the present embodiment.

The object data 602 is data of various objects appearing in the game such as the rod object 103 and the hand object 102. In addition, the object data 602 also includes data showing reference attitudes (initial attitudes) of the rod object 103 and the hand object 102.

The operation data 603 is data for showing the contents of operations performed on the mouse 40. The operation data 603 includes mouse sensor data 604, attitude sensor data 605, and button data 606. The mouse sensor data 604 is data outputted from the mouse sensor 43. The mouse sensor data 604 includes data showing a movement amount and a movement direction of the position of the mouse 40. In addition, based on the data, for example, the current position of the mouse 40 in a specified two-dimensional coordinate system (mouse coordinate system) can be grasped in the form of xy coordinates in the coordinate system. The attitude sensor data 605 is data outputted from the attitude sensor 44. In this example, the attitude sensor data 605 includes angular velocities around specified three axes (xyz-axes in FIG. 2). The button data 606 is data showing the pressed states of the button 42A to button 42D.

The mouse reference attitude data 607 is stored data showing an attitude used as the reference attitude of the mouse 40.

The difference attitude data 608 is data for showing a difference in rotation angle around the z-axis between the current attitude and the reference attitude of the mouse 40.

The movable state flag 609 is a flag for showing whether or not it is the movable state, and when the movable state flag 609 is ON, it indicates that it is the movable state.

The operation buffer 610 is a storage area for temporarily storing, for example, operation data up to several frames before. The operation buffer 610 is used, for example, to calculate a difference between the position/attitude of the mouse 40 one frame before and the current position/attitude of the mouse 40, etc.

[Flowcharts]

Next, the details of the processing in the present embodiment will be described. Here, processing regarding the operation on the rod object 103 as described above is mainly described, and the description of the details of other game processing is omitted. In the present embodiment, one or more processors read and execute a program stored in one or more memories, whereby flowcharts shown below are realized. In addition, the flowcharts are merely one example of the processing procedure. Therefore, as long as a similar result is obtained, processing orders of respective steps may be switched. In addition, values of variables and thresholds used in determination steps are also merely examples, and other values may be adopted as necessary.

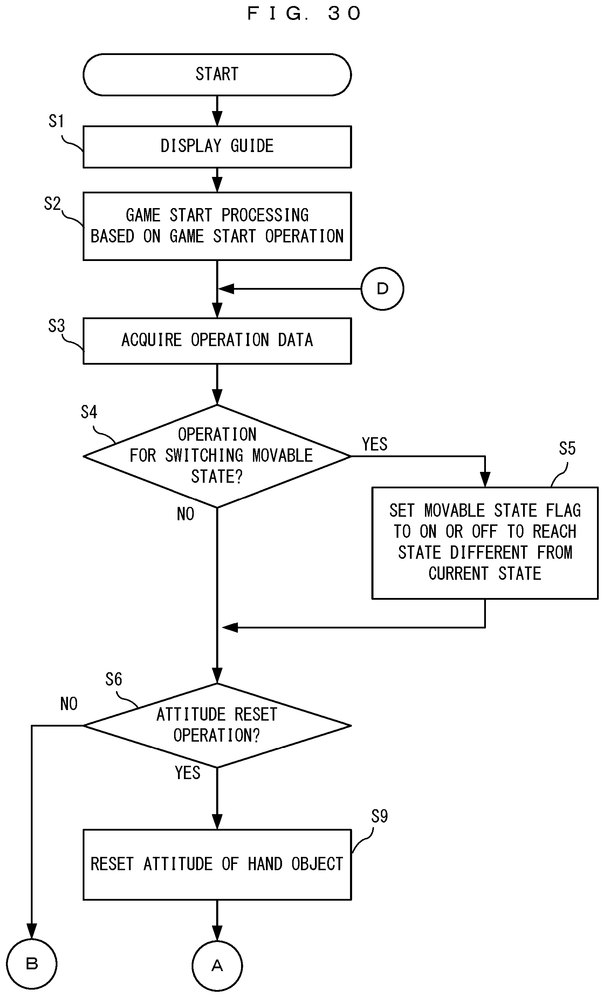

FIG. 30 to FIG. 32 are flowcharts showing the details of the game processing according to the present embodiment. In addition, the processing is an example of game processing for one stage in a stage-clear type game. In addition, a processing loop of step S3 to step S23 is repeated multiple times per second in accordance with a frame rate.

First, in step S1, the processor 21 displays a guide screen for explaining the rules of the game and an operation method for the mouse 40 to the user prior to start of actual game play. On the screen, for example, an image instructing the user to place the mouse 40 on a specified work surface in a specified attitude is displayed. The specified attitude is, as an example, an attitude that becomes similar to the initial attitude of the hand object 102. In the present embodiment, the specified attitude is assumed to be an attitude as shown in FIG. 24, for example. In addition, on the screen, it is also displayed that the game can be started by pressing a specified button (game start operation).

Next, in step S2, the processor 21 detects that the user has performed the game start operation, and performs game start processing. In the processing, processing for recording data showing the attitude of the mouse 40 at this time point as the mouse reference attitude data 607 is performed. In addition, processing for defining a correspondence relationship (initial correspondence relationship) between the up-down and left-right directions in the local coordinate system of the mouse 40 and the up-down and left-right directions within the screen at the time of start of play of the game is also performed. For example, initial correspondence relationship data (not shown) showing the correspondence relationship may be generated and stored in the storage unit 22. In this game, the guide screen is displayed so as to set the attitude as shown in FIG. 24 as the reference attitude, and it is assumed that the game is started with the attitude as shown in FIG. 24. If operation is performed as assumed, as the initial correspondence relationship, a correspondence relationship in which the y-axis positive direction in the local coordinate system of the mouse 40 in FIG. 2 corresponds to the upward direction of the screen and the x-axis positive direction corresponds to the right direction of the screen is defined. In addition, the processor 21 constructs a maze-like virtual space as shown in FIG. 4 and generates and displays a game image in which the rod object 103 is placed at the start point.

The game start processing (recording of the mouse reference attitude data 607) may be performed each time when, for example, a mistake is made during a stage and a restart is performed.

Next, in step S3, the processor 21 acquires the operation data 603. In addition, the processor 21 calculates the current position and the current attitude of the mouse 40 based on the operation data 603.

Next, in step S4, the processor 21 determines whether or not the user has performed an operation for switching between the movable state and the non-movable state (hereinafter, switching operation), based on the operation data 603. In the present embodiment, switching from the non-movable state to the movable state is pressing of the button 42A in a case where the hand object 102 and the rod object 103 are in a specified positional relationship. Specifically, the positional relationship is a positional relationship in which a part of the hand object 102 and a part of the rod object 103 overlap. In another example, these do not need to overlap, and for example, these may be adjacent. In addition, switching from the movable state to the non-movable state is caused by the button 42A, which has been pressed, being released.

As a result of the determination, if the switching operation has been performed (YES in step S4), in step S5, the processor 21 sets the movable state flag 609 to ON or OFF so as to switch between the movable state and the non-movable state to a state different from the current state. For example, if the switching operation (pressing of the button 42A) has been performed when the movable state flag 609 is OFF, the processor 21 sets the movable state flag 609 to ON. Thereafter, the processing proceeds to step S6 described later.

On the other hand, if, as a result of the determination in step S4 above, if the switching operation has not been performed (NO in step S4), in step S6, the processor 21 determines whether or not an attitude reset operation has been performed. The attitude reset operation is an operation for returning the attitude of the hand object 102 to the initial attitude. This operation is used, for example, in a case where the attitude of the mouse 40 and the attitude of the hand object 102 have a correspondence relationship unintended by the user, in order to adjust this correspondence relationship. To give an example, in a case where the game is started with the attitude as shown in FIG. 24 as the reference attitude, it is desirable to display the hand object 102 in an attitude rotated by 45° to the right originally with respect to an attitude in which the mouse 40 is rotated by 45° to the right. However, due to accumulation of detection errors of the attitude sensor 44, etc., a state may occur in which the attitude of the hand object 102 is an attitude rotated by only 30°, for example, and the actual attitude of the mouse 40 and the attitude of the hand object 102 are shifted from each other. In such a case, for example, after setting the attitude of the mouse 40 to the reference attitude, by performing the attitude reset operation, the attitude of the hand object 102 can be returned to the initial attitude, and the reference attitude of the mouse 40 and the attitude of the hand object 102 can be made to correspond to each other. In the present embodiment, the attitude reset operation is assumed to be pressing of the button 42D.

Regarding the above operation for attitude reset, in another embodiment, a configuration may be made such that it is possible to detect that the mouse 40 has been lifted up (raised), and it may be treated that the attitude reset operation has been performed when the mouse 40 was lifted up. A detection method of lifting up is not limited. For example, the mouse sensor data 604 or the attitude sensor data 605 may be used. Alternatively, the mouse 40 may include another sensor for detecting lifting up. In addition, the mouse 40 may determine lifting up, or the information processing apparatus 2 may determine lifting up based on an output from the mouse 40. When the user performed an action of lifting up, it is considered that an intention to return a hand grasping the mouse 40 to the original attitude is also included. Therefore, by resetting the attitude of the hand object 102 in accordance with such an action, the attitude of the mouse 40 and the attitude of the hand object 102 correspond to each other when the mouse 40 that was lifted up is returned to the work surface again, so that the user can continue operation without a sense of discomfort. In a case of such a configuration, movement of a finger for pressing the button 42D also becomes unnecessary, and by a natural and intuitive action in a process of a series of actions for operating the mouse 40, it becomes possible to reset the attitude of the hand object 102. In addition, as the operation for attitude reset, pressing of the button 42D or the like may be required in addition to lifting up. In addition, the attitude reset may be performed in response to a fact that the mouse 40 that was lifted up was returned to the work surface again.

In another embodiment, if the operation for attitude reset is performed in the movable state, the attitude of the rod object 103 may also be returned to the initial attitude.

If, as a result of the above determination, the attitude reset operation has been performed (YES in step S6), in step S9, the processor 21 resets the attitude of the hand object 102. Accompanying the reset, the processor 21 may reset the current attitude of the mouse 40 at this time as the mouse reference attitude data 607 and initialize the difference attitude data 608. Thereafter, the processing proceeds to step S21 described later.

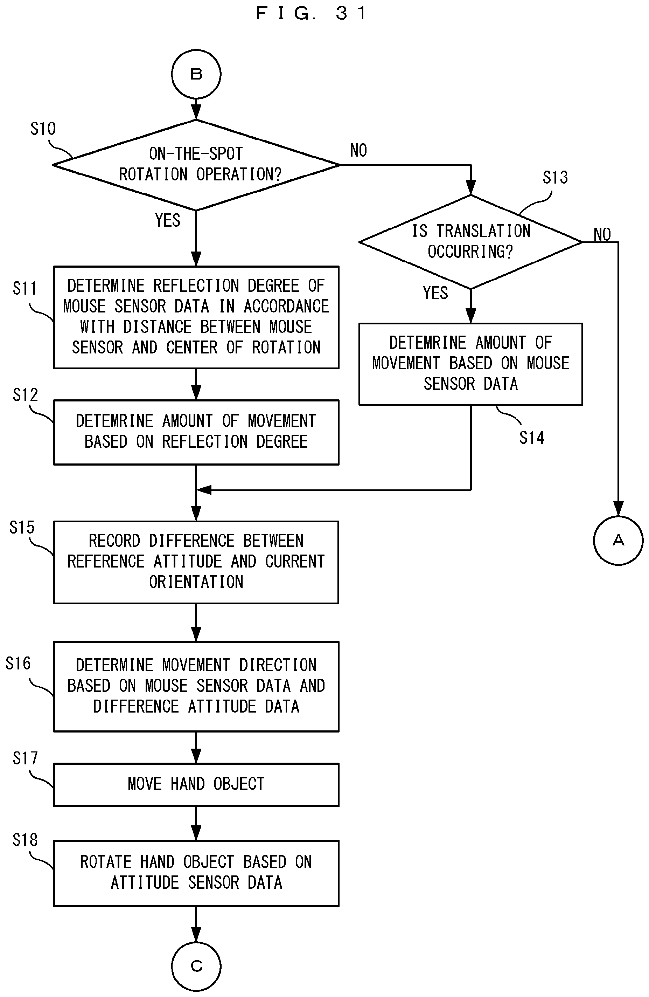

On the other hand, if, as a result of the determination in step S6 above, the attitude reset operation has not been performed (NO in step S6), in step S10 in FIG. 31, the processor 21 determines whether or not an action regarded as "on-the-spot rotation" as described above has been performed on the mouse 40, based on the mouse sensor data 604 and the attitude sensor data 605. The determination is performed by the principle as described above. If, as a result of the determination, it is determined to be "on-the-spot rotation" (YES in step S10), in step S11, the processor 21 determines a reflection degree for reflecting the mouse sensor data 604 in the movement amount of the hand object 102 in accordance with a parameter regarding the distance between the opening 45 and the rotation center (for example, the distance d). As an example, the reflection degree may be smaller as the parameter regarding the distance between the opening 45 and the rotation center is smaller. That is, it is inferred that the user does not intend translation as the distance between the opening 45 and the rotation center is closer, and thus the movement amount of the hand object 102 based on the mouse sensor data 604 may be made smaller. Next, in step S12, the processor 21 determines the movement amount of the hand object 102 based on the reflection degree. Thereafter, the processing proceeds to step S15.

On the other hand, if, as a result of the determination in step S10 above, it is not "on-the-spot rotation" (NO in step S10), it is considered that the mouse 40 is in any state of being stopped, being translated greatly while being rotated, or performing only without being rotated. Therefore, in step S13, the processor 21 determines whether or not translation (not due to "on-the-spot rotation") of the mouse 40 has occurred, based on the mouse sensor data 604 and the operation buffer 610. That is, whether or not it is a state in which there is no change in the position of the mouse 40 and the mouse 40 is not moving at all is determined. If, as a result of the determination, translation has not occurred (NO in step S13), the processing proceeds to step S21 described later. On the other hand, if translation has occurred (YES in step S13), in step S14, the processor 21 determines the movement amount of the hand object 102 based on the mouse sensor data 604. For example, the operation buffer 610 is referred to, and the movement amount is determined based on the magnitude of change from the position of the mouse 40 in a frame immediately before to the current position.

Next, in step S15, the processor 21 calculates a difference in angle around the z-axis between the current attitude and the reference attitude of the mouse 40, and records the difference in the difference attitude data 608 (updates in a case where it has been recorded).

Next, in step S16, the processor 21 corrects the movement direction derived from the mouse sensor data 604 as shown in FIG. 28, based on the mouse sensor data 604 and the difference attitude data 608, and determines the movement direction of the hand object 102 based on the correction. First, the processor 21 calculates the movement direction seen from the mouse 40 as described above, based on the mouse sensor data 604. Next, the processor 21 converts the calculated movement direction of the mouse 40 into a movement direction within the screen based on the initial correspondence relationship. Next, the processor 21 rotates the movement direction within the screen by the angle indicated by the difference attitude data 608. Then, the processor 21 determines the movement direction after the rotation as the movement direction of the hand object 102.

Next, in step S17, the processor 21 moves the hand object 102 based on the movement amount and the movement direction.

Next, in step S18, the processor 21 rotates the hand object 102 based on a rotation amount calculated from the attitude sensor data 605.

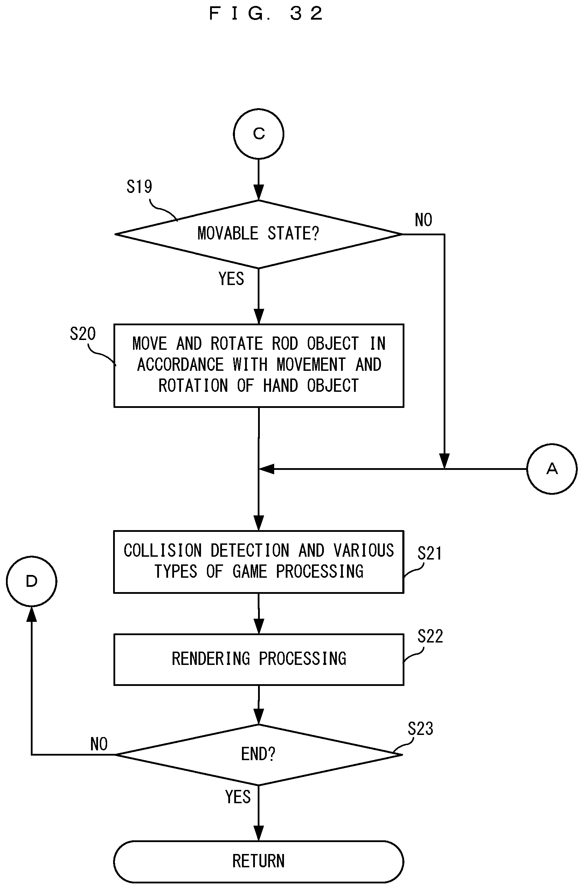

Next, in step S19 in FIG. 32, the processor 21 determines whether or not it is currently in the movable state, based on the movable state flag 609. If, as a result of the determination, it is in the movable state (YES in step S19), in step S20, the processor 21 moves and rotates the rod object 103 in accordance with movement and rotation of the hand object 102. For example, the processor 21 performs operation control by applying the movement amount, the movement direction, and the rotation amount of the hand object 102 determined based on the mouse sensor data 604 and the attitude sensor data 605 to the rod object 103 as they are. Alternatively, the rod object 103 may be controlled to move and rotate so as to follow the movement and rotation of the hand object 102.

On the other hand, if, as a result of the determination in step S19 above, it is not in the movable state (NO in step S19), the processing of step S20 is skipped. That is, only movement and rotation of the hand object 102 are performed.

Next, in step S21, the processor 21 performs collision detection between the rod object 103 and the obstacle objects 101, etc. In addition, the processor 21 executes various types of game processing including processing based on the collision detection.

Next, in step S22, the processor 21 generates a game image in which the above processing is reflected, and outputs the game image to the display unit 30.

Next, in step S23, the processor 21 determines whether or not a specified game end condition has been satisfied. For example, whether or not the rod object 103 has reached the goal point or whether or not a condition for game over has been satisfied is determined. If the game end condition has not yet been satisfied (NO in step S23), the processor 21 returns to step S3 and the processing is repeated. If the game end condition has been satisfied (YES in step S23), the processor 21 ends the game processing.

This is the end of the detailed description of the game processing in the present embodiment.

As described above, in the present embodiment, regarding handling of output data from the mouse sensor 43, different handling is performed between a case of "on-the-spot rotation" and a case where it is not so. As described above, even when the action of "on-the-spot rotation" is performed, as long as the position of the opening 45 and the rotation center do not coincide, the output of the mouse sensor 43 also changes in accordance with translation of the mouse 40, and even though the user does not intend it, movement control of an object may be executed. Therefore, in a case where a condition regarded as "on-the-spot rotation" is satisfied as described above, while rotation control of the operation target object based on the attitude sensor data 605 is executed, the amount of translation of the operation target object is made smaller than in a case where it is not "on-the-spot rotation". This makes it easier to reflect control in accordance with the intention of the user regarding the operation of "on-the-spot rotation".

[Modifications]

In the above embodiment, the mouse sensor 43 detects movement of the mouse 40 and outputs its movement direction, movement amount, etc. In another embodiment, the mouse sensor 43 may output only data regarding reflected light from a work surface, and the information processing apparatus 2 may output whether there has been movement of the mouse or the movement direction, movement amount, etc., based on the data. In addition, in the above embodiment, the information processing apparatus 2 calculates the current position of the mouse 40 in the mouse coordinate system. However, the mouse sensor 43 may calculate the current position of the mouse 40 and transmit data regarding the current position to the information processing apparatus 2. In addition, neither the information processing apparatus 2 nor the mouse sensor 43 may calculate the current position of the mouse 40. The same applies to the attitude sensor 44, and either the information processing apparatus 2 or the mouse 40 may calculate the actual attitude.

The shape of the mouse 40 in the above embodiment is an example. For example, a grip that is easy for the user to hold and lift up may be provided. As an example, the mouse 40 may be used like a general game controller. That is, a game controller having the mouse sensor 43 is included in a range of the mouse in the present disclosure. In addition, the mouse 40 may be attachable to and detachable from another apparatus. In addition, as an example, a pair of two mice may be used. At this time, one mouse may include an operation means on a left side surface thereof like the mouse 40 in the above embodiment, and the other mouse may include an operation means on a right side surface thereof.

In the above embodiment, the virtual object is movable in two-dimensional directions on the screen, but may be movable in only a one-dimensional direction. In addition, the rotatable range of the virtual object may be limited. In addition, a rotation angle of the mouse 40 and a rotation angle of the virtual object do not have to coincide.

In the above embodiment, an image in which the virtual object is looked down upon from above is projected on the screen, and the virtual object moves on a plane. In another embodiment, an image in which the virtual object is captured from behind may be projected on the screen. In addition, the virtual object may move on a curved surface instead of on a plane. In such a case, such movement is also included in translation in the present disclosure. A plane on which the virtual object moves may be an invisible plane, or it may be sufficient that the virtual object as a result translates even if it is not defined as a surface.

In the above embodiment, an example has been shown in which rotation of the mouse 40 is also reflected in rotation of the hand object 102. In another embodiment, rotation of the mouse 40 may be reflected in only the rod object 103, and the hand object 102 may not be rotated.

In addition, in the above embodiment, an example has been shown in which the hand object 102 is displayed as a mouse pointer and an operation experience as if the rod object 103 was grasped and moved by the hand object 102 is provided. In another embodiment, a game similar to the above may be a game in which there is no hand object 102. In this case, the translation operation and rotation operation on the mouse 40 are reflected in movement and rotation of the rod object 103 as they are. In a case where such an operation system is used, for example, control may be performed such that each time when a left-click operation (on-off operation on the button 42A) is performed once, the movable state and the non-movable state are switched.

In addition, in the above embodiment, the operation target object is "moved" based on output data from the mouse sensor 43, and the operation target object is "rotated" based on output data from the attitude sensor 44. In another embodiment, the output data from the attitude sensor 44 may be used for object control other than "rotation". For example, when the mouse 40 is rotated clockwise (based on the reference attitude as shown in FIG. 24), an "attack state" in which the operation target object performs an attack action is set. On the other hand, when the mouse 40 is rotated counterclockwise, control for setting a "defense state" in which the operation target object performs a defense action may be performed.

In addition, in the above embodiment, in a case of "on-the-spot rotation", control for reducing the amount of translation is performed and control for correcting the movement direction by the output from the mouse sensor 43 is performed. That is, an example in which two types of control are used together has been shown. In another embodiment, only either one control may be performed in accordance with game contents, etc. For example, only the correction control of the movement direction as described above may be performed without performing control for reducing the amount of translation in a case of "on-the-spot rotation". Without performing determination of whether or not it is "on-the-spot rotation", only the correction control of the movement direction may be performed constantly or in an appropriate scene. In addition, conversely to this, control in "on-the-spot rotation" may be performed, but correction of the movement direction may not necessarily be performed.

In addition, in the above embodiment, control for reducing the amount of translation is performed if it is determined to be "on-the-spot rotation". However, in another embodiment, control for reducing the amount of translation (including zero) may be performed without performing determination with two values of whether or not it is "on-the-spot rotation". For example, control for reducing the amount of translation in accordance with the distance d may be performed. As an example, an amount obtained by multiplying dx or dy by a value that is a value between 0 and 1 and approaches 0 as d is smaller may be defined as the amount of translation. In this case, for example, if d is equal to or less than a specified value, the above value may be fixed to 0, or if d is equal to or greater than another specified value, the above value may be fixed to 1.

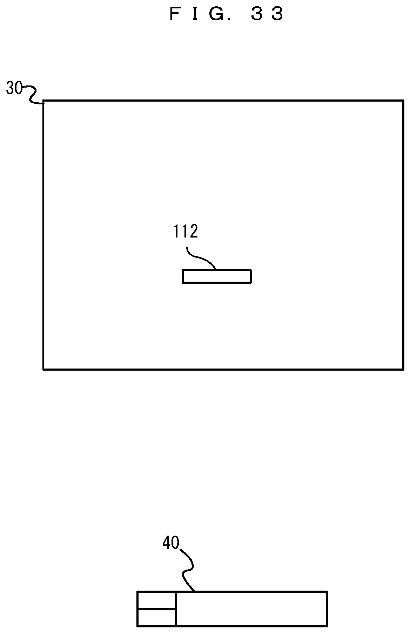

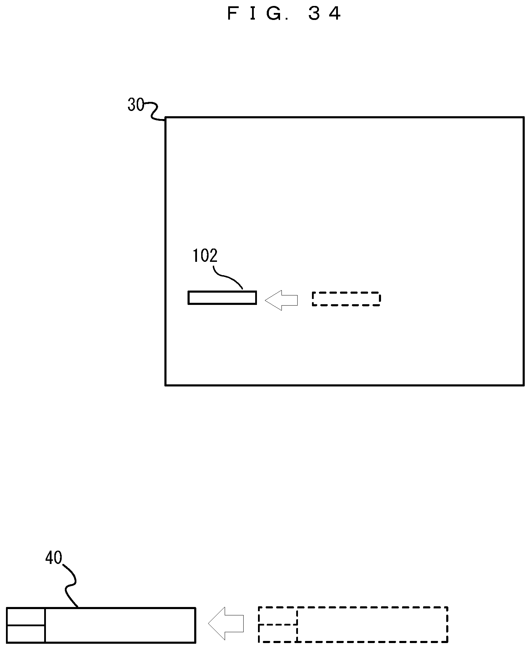

In addition, in the above embodiment, in the initial state, movements in the front-rear direction and the left-right direction of the mouse 40 corresponded to the up-down direction and the left-right direction within the screen, respectively. In another embodiment, a different correspondence relationship may be set in the initial state. For example, as shown in FIG. 33 and FIG. 34, it is a relationship in which a front direction seen from the mouse 40 corresponds to the left direction of the screen and the right direction corresponds to the upward direction of the screen. That is, the correspondence relationship between the front-rear and left-right directions in the local coordinate system of the mouse 40 and the movement direction of the object 112 within the screen may be changed in advance from a general correspondence relationship. As an example, as shown in FIG. 33 and FIG. 34, in a case where a virtual object operated by the mouse 40 is a horizontally long object 112, by rotating the mouse 40 by 90 degrees and operating the mouse 40 in a horizontally long state, the user can intuitively operate the mouse 40 due to similarity of shapes. The control for correcting the movement direction based on the output from the mouse sensor 43 as described above may be performed or may not necessarily be performed. In addition, determination of "on-the-spot rotation" and various types of control based on the determination of "on-the-spot rotation" may also be performed or may not necessarily be performed.

In the above, in order to determine whether or not it is "on-the-spot rotation", an example was shown in which the distance d was calculated and whether or not the distance d was within a range of a specified threshold was determined. In this regard, in another embodiment, for example, if the amount of translation detected by the mouse sensor 43 within a specified period is equal to or less than a threshold, it may be regarded as "on-the-spot rotation" and control such as not translating the operation target object may be performed. That is, "on-the-spot rotation" may be determined without using the output of the attitude sensor as described above.

In addition, in the above embodiment, the threshold compared with the distance d is a predetermined value, but may be variable. For example, the threshold may be changed depending on a mouse used. This is because depending on a mouse, the length in the front-rear direction of a bottom surface differs, or the bottom surface has a certain width instead of a vertically long shape in the front-rear direction, and furthermore, a tendency of the position of the rotation center when "on-the-spot rotation" is intended also differs depending on how a hand is placed by the user. In this case, a plurality of thresholds corresponding to a plurality of mice may be prepared, and a threshold corresponding to a mouse to be used may be selected. For example, for each model of a mouse, an ID for model identification may be stored in the mouse itself. Then, the information processing apparatus 2 may acquire the ID for model identification from the mouse connected to the information processing apparatus 2, select a threshold corresponding to the ID, and use the threshold for the determination processing as described above. In addition, other than that, data indicating the bottom surface shape of the mouse as an example or the ID for model identification may be received from the mouse, and based on the information, the information processing apparatus 2 (including a server, etc.) may calculate or correct the threshold. Instead of making the threshold variable by the mouse, the distance d may be made variable, or a comparison method may be changed.

In addition, in the above embodiment, an example has been given in which the processing as described above is applied to a game in which the rod object 103 is moved to the goal point in a maze-like passage. Besides this, the above processing is applicable also to the following game processing. For example, the above processing is applicable to a block-breaking game. Specifically, a bar in a block-breaking game is moved left and right by movement of the mouse 40. In addition, by rotating the mouse 40, the bar can be rotated, and a direction in which a ball is hit back can be made operable to some extent. At this time, by moving the mouse 40 in the front-rear direction, the bar on the screen may move in the left-right direction. That is, the user may operate the mouse 40 by placing a hand on the mouse 40 such that the longitudinal direction of the mouse 40 is directed sideways. In addition, the bar may be moved only in the left-right direction. In such a game, the guide screen may be displayed so as to set an attitude in which the mouse 40 is rotated by 90° from the attitude shown in FIG. 24 as the reference attitude. Then, when the game start operation is performed, an initial correspondence relationship in which the y-axis positive direction of the local coordinate system of the mouse 40 corresponds to the left direction or right direction of the screen may be defined. That is, an initial correspondence relationship in which a relationship between the xy-axes of the local coordinate system of the mouse 40 shown in FIG. 2 and the xy-axes of the screen does not coincide may be defined. In this case, in the processing for correcting the movement direction as described above, processing for further correcting a movement direction derived on a premise of the initial correspondence relationship defined here is performed. In addition, the above processing is applicable also to a top-down 2D shooting game in which a "tank" is operated as an operation target object. In this case, for example, the body of the tank is moved by translation of the mouse 40. In addition, the gun barrel of the tank is rotated by an rotation operation on the mouse 40 to change a shooting direction. In a case where such an operation system is used, the processing as described above is applicable.

In addition, the above processing is applicable also to other than game processing. For example, in a case where an operation of pressing a stamp image is performed by a paint tool, an operation such as pressing the stamp image after rotating the stamp image by rotating the mouse 40 becomes possible.

In another embodiment, for example, when performing determination for the distance d and the threshold, a detection result of an acceleration sensor may be used together. In a case of "on-the-spot rotation", it is considered that acceleration also becomes a small value. Therefore, by further considering whether or not acceleration is small, the accuracy of determination of whether or not it is a movement of "on-the-spot rotation" can be improved.

In the above embodiment, a case has been described where the game processing as described above is executed by a single information processing apparatus 2. The information processing apparatus 2 may include a plurality of storages and processors. The above game processing may be shared and executed by these storages and processors. In addition, the information processing apparatus may include a server. Then, the above processing may be executed in a distributed system including a plurality of information processing apparatuses including a server.

INDUSTRIAL APPLICABILITY

The information processing method, the information processing program, and the information processing system according to the present disclosure can improve operability when operating a virtual object using a mouse, and are useful for applications of various types of information processing using a mouse.

DESCRIPTION OF THE REFERENCE CHARACTERS

2    information processing apparatus
21   processor
22   storage unit
30   display unit
40   mouse

**Claims**

1. An information processing method causing a processor of an information processing apparatus to:

   acquire first data based on an output of an optical sensor provided in a mouse;
   acquire second data based on an output of an attitude sensor provided in the mouse;
   translate a first virtual object based on the first data;
   perform first control on the first virtual object based on the second data; and
   when the first data and the second data satisfy a first condition, make an amount of translation of the first virtual object based on the first data smaller than an amount of translation in a case where the first condition is not satisfied, while performing the first control on the object based on the second data.

2. The information processing method according to claim 1, wherein, when the first condition is satisfied, the first virtual object is not translated.

3. The information processing method according to claim 1, further causing the processor to determine a degree of making the amount of translation of the first virtual object smaller, in accordance with the first data and/or the second data.

4. The information processing method according to any one of claims 1 to 3, wherein the first control is control for rotating the first virtual object.

5. The information processing method according to claim 4, further causing the processor to make a movement direction of the first virtual object based on the first data correspond to an attitude after rotation of the first virtual object.

6. The information processing method according to claim 5, further causing the processor to, when the first virtual object has rotated by a first angle, rotate the movement direction of the first virtual object based on the first data by the first angle.

7. The information processing method according to claim 5 or 6, further causing the processor to:

   acquire third data based on a first operation on the mouse; and
   set the attitude of the first virtual object to a specified attitude based on the third data.

8. The information processing method according to any one of claims 5 to 7, further causing the processor to:

   execute specified game processing; and
   at start of play of a game by the specified game processing, display a screen for guiding an initial attitude of the mouse at the start.

9. The information processing method according to claim 8, further causing the processor to:

   acquire fourth data based on a second operation on the mouse; and

start play of the game based on the fourth data.

10. The information processing method according to any one of claims 1 to 9, further causing the processor to:

acquire fifth data based on a third operation on the mouse;

acquire sixth data based on a fourth operation on the mouse;

when the first virtual object is in a specified positional relationship with a second virtual object, set the second virtual object to a movable state based on the fifth data;

set the second virtual object to a non-movable state based on the sixth data; and

move and rotate the second virtual object in the movable state in accordance with movement and rotation of the first virtual object.

11. The information processing method according to any one of claims 1 to 10, wherein the first condition is a condition indicating that a center of a rotation operation of the mouse is within a specified range.

12. The information processing method according to claim 11, wherein the specified range is a range included in a bottom surface of the mouse.

13. The information processing method according to any one of claims 1 to 10, wherein the first condition is a condition indicating that an amount of horizontal movement of the mouse relative to an amount of rotation of the mouse is small.

14. The information processing method according to any one of claims 1 to 13, further causing the processor to:

acquire seventh data stored in the mouse, from the mouse; and

set the first condition based on the seventh data.

15. An information processing program for causing a processor of an information processing apparatus to:

acquire first data based on an output of an optical sensor provided in a mouse;

acquire second data based on an output of an attitude sensor provided in the mouse;

translate a first virtual object based on the first data;

perform first control on the first virtual object based on the second data; and

when the first data and the second data satisfy a first condition, make an amount of translation of the first virtual object based on the first data smaller than an amount of translation in a case where the first condition is not satisfied, while performing the first control on the object based on the second data.

16. An information processing system comprising a mouse having an optical sensor and an attitude sensor, and a processor, wherein

the mouse

transmits first data based on an output of the optical sensor, and

transmits second data based on an output of the attitude sensor, and

the processor

translates a first virtual object based on the acquired first data,

performs first control on the first virtual object based on the second data, and

when the first data and the second data satisfy a first condition, makes an amount of translation of the first virtual object based on the first data smaller than an amount of translation in a case where the first condition is not satisfied, while performing the first control on the object based on the second data.

F I G.  1

F I G. 2

F I G. 3

F I G. 4

F I G. 5

FIG. 6

FIG. 7

F I G. 8

F I G. 9

FIG. 10

FIG. 11

FIG. 12

FIG. 13

FIG. 14

F I G. 1 5

F I G. 1 6

F I G. 1 7

F I G. 1 8

F I G. 1 9

F I G. 2 0

OPENING

CENTER OF
ROTATION

F I G. 2 1

OPENING

CENTER OF
ROTATION

F I G. 2 2

OPENING

CENTER OF
ROTATION

F I G. 2 3

● OPENING

○ CENTER OF
ROTATION

MOUSE
COORDINATE
SYSTEM

FIG. 24

MONITOR

y
↑
|
z O———→ x

LOCAL
COORDINATE
SYSTEM OF MOUSE

FIG. 25

TILT FROM REFERENCE
ATTITUDE
(APPROXIMATELY 30°)

F I G. 2 6

F I G. 2 7

F I G.  2 8

CORRECTED MOVEMENT
DIRECTION

CORRECT MOVEMENT
DIRECTION USING TILT
FROM REFERENCE
ATTITUDE

DIRECT MOVEMENT DIRECTION DERIVED
FROM MOUSE SENSOR OUTPUT VALUE

F I G. 2 9

22

601 GAME PROGRAM

602 OBJECT DATA

603 OPERATION DATA

604 MOUSE SENSOR DATA

605 ATTITUDE SENSOR DATA

606 BUTTON DATA

607 MOUSE REFERENCE ATTITUDE DATA

608 DIFFERENCE ATTITUDE DATA

609 MOVABLE STATE FLAG

610 OPERATION BUFFER

:

F I G. 3 0

```
              ┌─────────────────────────┐
              │          START          │
              └─────────────────────────┘
                           │
         S1   ┌─────────────────────────┐
              │      DISPLAY GUIDE       │
              └─────────────────────────┘
                           │
         S2   ┌─────────────────────────┐
              │  GAME START PROCESSING   │
              │ BASED ON GAME START OPERATION │
              └─────────────────────────┘
                           │◄──────────────( D )
         S3   ┌─────────────────────────┐
              │  ACQUIRE OPERATION DATA  │
              └─────────────────────────┘
                           │
         S4          ◇ OPERATION ◇            S5
              ◇ FOR SWITCHING MOVABLE ◇─── YES ──┐
                    ◇  STATE?  ◇          ┌─────────────────────┐
                       NO                 │ SET MOVABLE STATE FLAG│
                        │                 │ TO ON OR OFF TO REACH │
                        │                 │ STATE DIFFERENT FROM  │
                        │                 │    CURRENT STATE      │
                        │◄────────────────┴─────────────────────┘
         S6             │
     NO          ◇ ATTITUDE RESET ◇
      │          ◇   OPERATION?   ◇
      │               YES
      │                │
      │         ┌─────────────────────────┐  S9
      │         │ RESET ATTITUDE OF HAND OBJECT │
      │         └─────────────────────────┘
      │                │
    ( B )            ( A )
```

F I G. 3 1

B

S10

ON-THE-SPOT
ROTATION OPERATION? — NO

S13
IS TRANSLATION
OCCURRING? — NO

YES

S11
DETERMINE REFLECTION DEGREE OF
MOUSE SENSOR DATA IN ACCORDANCE
WITH DISTANCE BETWEEN MOUSE
SENSOR AND CENTER OF ROTATION

YES

DETEMRINE AMOUNT OF
MOVEMENT BASED ON MOUSE
SENSOR DATA

S14

S12
DETEMRINE AMOUNT OF MOVEMENT
BASED ON REFLECTION DEGREE

A

S15
RECORD DIFFERENCE BETWEEN
REFERENCE ATTITUDE AND CURRENT
ORIENTATION

S16
DETERMINE MOVEMENT DIRECTION
BASED ON MOUSE SENSOR DATA AND
DIFFERENCE ATTITUDE DATA

S17
MOVE HAND OBJECT

S18
ROTATE HAND OBJECT BASED ON
ATTITUDE SENSOR DATA

C

FIG. 32

C

S19

MOVABLE STATE?    NO

YES

S20    MOVE AND ROTATE ROD OBJECT IN ACCORDANCE WITH MOVEMENT AND ROTATION OF HAND OBJECT

A

COLLISION DETECTION AND VARIOUS TYPES OF GAME PROCESSING    S21

D

RENDERING PROCESSING    S22

NO    END?    S23

YES

RETURN

F I G. 3 3

30

112

40

F I G. 3 4

## INTERNATIONAL SEARCH REPORT

| International application No. |
| --- |
| **PCT/JP2023/039895** |

| | |
| --- | --- |
| **A.** | **CLASSIFICATION OF SUBJECT MATTER** |

*G06F 3/0354*(2013.01)i; *G06F 3/038*(2013.01)i; *G06F 3/04812*(2022.01)i; *G06F 3/04845*(2022.01)i
FI: G06F3/0354 442; G06F3/038 350Z; G06F3/04812; G06F3/04845

According to International Patent Classification (IPC) or to both national classification and IPC

| | |
| --- | --- |
| **B.** | **FIELDS SEARCHED** |

Minimum documentation searched (classification system followed by classification symbols)

G06F3/0354; G06F3/038; G06F3/04812; G06F3/04845

Documentation searched other than minimum documentation to the extent that such documents are included in the fields searched

Published examined utility model applications of Japan 1922-1996
Published unexamined utility model applications of Japan 1971-2023
Registered utility model specifications of Japan 1996-2023
Published registered utility model applications of Japan 1994-2023

Electronic data base consulted during the international search (name of data base and, where practicable, search terms used)

| | |
| --- | --- |
| **C.** | **DOCUMENTS CONSIDERED TO BE RELEVANT** |

| Category* | Citation of document, with indication, where appropriate, of the relevant passages | Relevant to claim No. |
| --- | --- | --- |
| A | JP 08-278846 A (DATA TEC KK) 22 October 1996 (1996-10-22)<br>entire text, all drawings | 1-16 |
| A | JP 2007-241607 A (NEC CORPORATION) 20 September 2007 (2007-09-20)<br>entire text, all drawings | 1-16 |
| A | JP 2004-070843 A (KABUSHIKI KAISHA MEIDENSHA) 04 March 2004 (2004-03-04)<br>entire text, all drawings | 1-16 |
| A | JP 2010-033400 A (NANAO CORP.) 12 February 2010 (2010-02-12)<br>entire text, all drawings | 1-16 |
| A | JP 2012-059092 A (NANAO CORP.) 22 March 2012 (2012-03-22)<br>entire text, all drawings | 1-16 |
| A | US 2012/0068927 A1 (POSTON, Timothy) 22 March 2012 (2012-03-22)<br>entire text, all drawings | 1-16 |

☐ Further documents are listed in the continuation of Box C.    ☑ See patent family annex.

| | |
| --- | --- |
| *   Special categories of cited documents:<br>"A"   document defining the general state of the art which is not considered to be of particular relevance<br>"E"   earlier application or patent but published on or after the international filing date<br>"L"   document which may throw doubts on priority claim(s) or which is cited to establish the publication date of another citation or other special reason (as specified)<br>"O"   document referring to an oral disclosure, use, exhibition or other means<br>"P"   document published prior to the international filing date but later than the priority date claimed | "T"   later document published after the international filing date or priority date and not in conflict with the application but cited to understand the principle or theory underlying the invention<br>"X"   document of particular relevance; the claimed invention cannot be considered novel or cannot be considered to involve an inventive step when the document is taken alone<br>"Y"   document of particular relevance; the claimed invention cannot be considered to involve an inventive step when the document is combined with one or more other such documents, such combination being obvious to a person skilled in the art<br>"&"   document member of the same patent family |

| Date of the actual completion of the international search | Date of mailing of the international search report |
| --- | --- |
| **13 December 2023** | **26 December 2023** |

| Name and mailing address of the ISA/JP | Authorized officer |
| --- | --- |
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (January 2015)

## INTERNATIONAL SEARCH REPORT
### Information on patent family members

International application No.

**PCT/JP2023/039895**

| Patent document cited in search report | | | Publication date (day/month/year) | Patent family member(s) | | | Publication date (day/month/year) |
|---|---|---|---|---|---|---|---|
| JP | 08-278846 | A | 22 October 1996 | US entire text, all drawings | 6164808 | A | |
| JP | 2007-241607 | A | 20 September 2007 | (Family: none) | | | |
| JP | 2004-070843 | A | 04 March 2004 | (Family: none) | | | |
| JP | 2010-033400 | A | 12 February 2010 | (Family: none) | | | |
| JP | 2012-059092 | A | 22 March 2012 | (Family: none) | | | |
| US | 2012/0068927 | A1 | 22 March 2012 | EP entire text, all drawings | 1804154 | A2 | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2004070843 A